# EUROPÄISCHE PATENTSCHRIFT

(11) **EP 2 365 234 B1**
(45) Veröffentlichungstag und Bekanntmachung des Hinweises auf die Patenterteilung: **17.06.2015**
(21) Anmeldenummer: 11001785.2
(22) Anmeldetag: 03.03.2011
(51) Int. Cl.: F16J 13/18, B01J 3/03, B63G 8/00, B63G 8/40

(54) **Verschlussvorrichtung**
Locking device
Dispositif de fermeture

(30) Priorität: 11.03.2010 DE 102010011075
(43) Veröffentlichungstag der Anmeldung: 14.09.2011
(73) Patentinhaber: ThyssenKrupp Marine Systems GmbH, 24143 Kiel (DE)
(72) Erfinder: Nowoisky, Adrian, Dipl.-Ing., 24113 Molfsee (DE); Knop, Christian, Dipl.-Ing., 24244 Felm (DE); Pantke, Marcel, Dipl.-Ing., 19348 Perleberg (DE)
(74) Vertreter: Vollmann, Heiko

(56) Entgegenhaltungen:
- GB-A- 328 352
- GB-A- 391 886
- GB-A- 857 203
- GB-A- 871 719
- US-A- 1 302 264
- US-B1- 6 253 632

## Beschreibung

Die Erfindung betrifft eine Verschlussvorrichtung mit den im Oberbegriff des Anspruchs 1 angegebenen Merkmalen.

Solche Verschlussvorrichtungen sind beispielsweise aus dem Schiffbau bekannt. Sie werden insbesondere dort eingesetzt, wo vergleichsweise schwere schwenkbare Verschlussklappen manuell von einer Schließstellung in eine Öffnungsstellung und umgekehrt zu schwenken sind. Das zum Verschwenken der Verschlussklappe erforderliche Drehmoment wird bei den in Rede stehenden Verschlussvorrichtungen im Bereich der Schwenkachse der Verschlussklappe, d.h. im Bereich eines Scharniers, an dem die Verschlussklappe angelenkt ist, eingeleitet. Hierzu wird bislang üblicherweise ein Drehmomentvervielfältiger verwendet.

Insbesondere dann, wenn die zu öffnende bzw. zu verschließende Verschlussklappe seewasserumgeben, d.h. unter Wasser beispielsweise an einem Unterseeboot angeordnet ist und nur von einem Taucher zu öffnen bzw. zu verschließen ist, ist die Verwendung eines Drehmomentvervielfältigers mit einer Reihe von Nachteilen verbunden. Dies sind zum einen die hohen Anschaffungskosten für einen Drehmomentvervielfältiger zum anderen sind die bislang zur Verfügung stehenden Werkzeuge dieser Art nicht seewasserbeständig und damit einhergehend einem großen Verschleiß unterworfen. Schließlich besteht die Gefahr, dass der Drehmomentvervielfältiger bei dessen Loslassen während des Einsatzes ggf. unwiederbringlich verloren gehen kann. Bei der Anwendung des Drehmomentvervielföltigers selbst erweist sich dessen verhältnismäßig großes Gewicht als problematisch. Darüber hinaus hat sich gezeigt, dass die Anbringung dieses Werkzeugs an der dafür vorgesehen Anlenkstelle der Verschlussklappe im Bereich des Scharniers umständlich ist.

In GB 328,352 A ist eine Verschlussvorrichtung beschrieben, bei der ein Deckel über zwei Hebel an zwei Scharnieren angelenkt ist. Zum Auf- und Zuschwenken des Deckels ist jeder der Hebel mit jeweils einem Spindeltrieb bewegungsgekoppelt, wobei die beiden Spindeltriebe jeweils außenseitig bedbstandet von den Scharnieren angeordnet sind.

Aus GB 391,886 A ist einen Vorrichtung zum Anheben und Herablassen eines Tank- oder Laderaumdeckels bekannt. Der Tank- bzw. Laderaumdeckel stützt sich an einer Seite des Randes einer von dem Deckel zu verschließenden Öffnung ab. An zwei voneinander abgewandten Seiten des Tanks- bzw. Laderaums ist ein Bügelhebel angelenkt, weicher den Tank- bzw. Laderaumdeckel übergreift. Dieser Bügelhebel ist über eine Gelenkstange mit dem Tank- bzw. Laderaumdeckel und über eine weitere Gelenkstange mit einem Spindeltrieb bewegungsverbunden, mit dem der Tank- bzw. Laderaumdeckel angehoben und abgesenkt werden kann.

US 6,253,632 B1 ist ein Schraubgetriebe zu entnehmen, bei dem zwei Spindeltriebe miteinander bewegungsgekoppelt sind. Die Spindel und Spindelmutter der beiden Spindeltriebe weisen unterschiedliche Gewindesteigungen auf.

GB 857,203 A betrifft ein Schraubgetriebe mit einer Gewindespindel, welche in ihren beiden Endabschnitten unterschiedliche Steigungen aufweist. Auf jedem der Endabschnitte ist eine Spindelmutter aufgeschraubt, die axial feststehend drehbar gelagert ist. Eine der Spindelmuttern bildet die Antriebsseite des Schraubgetriebes und die andere Spindelmutter die Abtriebsseite des Schraubgetriebes.

In US 1,302,264 A ist eine Verschlussvorrichtung beschrieben, bei der eine Verschlussklappe an einem Scharnier angelenkt ist, das von einer Gewindespindel eines Spindeltriebs gebildet wird, wobei die Verschlussklappe mit eine Spindelmutter des Spindeltriebs bewegungsgekoppelt und auf diese Weise verschwenkbar ist.

Vor diesem Hintergrund liegt der Erfindung die Aufgabe zugrunde, eine Verschlussvorrichtung zu schaffen, mit der auch eine schwere Verschlussklappe ohne Einsatz eines Drehmomentvervielfältigers vorzugsweise auch Unterwasser einfach und weiter bevorzugt auch manuell geöffnet und verschlossen werden kann.

Gelöst wird diese Aufgabe durch eine Verschlussvorrichtung mit den in Anspruch 1 angegebenen Merkmalen. Vorteilhafte Weiterbildungen dieser Verschlussvorrichtung ergeben sich aus den Unteransprüchen, der nachfolgenden Beschreibung sowie der Zeichnung. Hierbei können gemäß der Erfindung die in den Unteransprüchen und der Beschreibung angegebenen Merkmale jeweils für sich aber auch in geeigneter Kombination die erfindungsgemäße Lösung gemäß Anspruch 1 weiter ausgestalten.

Die erfindungsgemäße Verschlussvorrichtung weist eine Verschlussklappe auf, die mittels mindestens eines außenseitig der Öffnung angeordneten Scharniers angelenkt ist. Unter einer Verschlussklappe im Sinne der Erfindung kann jeder, eine Öffnung wahlweise verschließender oder freigebender angelenkter Gegenstand, wie z.B. eine Tür, ein Lukenverschluss, ein Deckel oder ähnliches sein. An dem Scharnier sind Betätigungsmittel zum Öffnen und Verschließen der Verschlussklappe angeordnet.

Gemäß der Erfindung beinhalten die Betätigungsmittel ein Schraubgetriebe. Dieses Schraubgetriebe schafft eine Bewegungskopplung der zu verschwenkenden Verschlussklappe mit einer Einrichtung, an der die Kraft bzw. das Drehmoment zum Betätigen der Verschlussvorrichtung eingeleitet wird. Das Schraubgetriebe dient dazu, die zum Verschwenken der Verschlussklappe erforderliche Kraft bzw. ein hierfür erforderliches Drehmoment durch eine Untersetzung in dem Schraubgetriebe möglichst gering zu halten, so dass die Verschlussklappe ohne größere Kraftaufwendung und günstigsten Falls manuell verschwenkt werden kann. Typischerweise ist das Schraubgetriebe hierzu als ein Untersetzungsgetriebe ausgestaltet.

Ein solches Schraubgetriebe ist insbesondere auch für den unter Wasser Einsatz besonders vorteilhaft, da es zum einen kompakt baut, zum anderen in seiner Übersetzung konstruktiv einstellbar ist. Schraubgetriebe sind darüber hinaus robust und haben geringen Verschleiß, sie unterliegen der Selbsthemmung, wodurch sichergestellt ist, dass der Verschluss in jeder Winkelstellung feststeht und nicht versehentlich auf oder zu schwenken kann.

Ein Spindeltrieb bilden das Schraubgewinde. Dies ermöglicht eine sehr schlanke und damit einhergehend raumsparende Getriebeausgestaltung, die insbesondere dann von Vorteil ist, wenn die erfindungsgemäße Verschlussvorrichtung an einem Wasserfahrzeug in einem von Wasser umströmten Bereich angeordnet ist, wobei die Verschlussvorrichtung aufgrund der schlanken Getriebeausgestaltung bei geeigneter Anordnung nur unwesentlich die Strömungseigenschaften des Wasserfahrzeugs beeinflusst.

In einer besonders raumsparenden, bevorzugten Weiterbildung der erfindungsgemäßen Verschlussvorrichtung kann eine Längsachse einer Gewindespindel des Spindeltriebs mit einer Schwenkachse des Scharniers übereinstimmen. Demzufolge ist beispielsweise eine Ausgestaltung denkbar, bei der die Gewindespindel des Spindeltriebs durch das Scharnier geführt ist. Insofern ragt das verwendete Schraubgetriebe, wenn überhaupt, nur unwesentlich quer zur Achsrichtung über das Scharnier hinaus.

An einer mit der Verschlussklappe verbundenen Scharnieraufhängung ist eine Spindelmutter des Spindeltriebs befestigt. Dann ist diese Spindelmutter zusammen mit der Scharnieraufhängung um eine von der Gewindespindel gebildeten Dreh- bzw. Schwenkachse drehbar, wobei die Drehbewegung der Spindelmutter und eine daraus resultierende Schwenkbewegung der Verschlussklappe durch eine Linearbewegung der in die Spindelmutter eingreifenden Gewindespindel hervorgerufen wird.

Um sicherzustellen , dass die Gewindespindel lediglich in Achsrichtung linear bewegt werden kann und nicht verdreht werden kann, können zweckmäßigerweise Formschlussmittel als Verdrehsicherung, also zur Verhinderung einer Verdrehung der Gewindespindel vorgesehen sein. So kann beispielsweise an der Außenseite der Gewindespindel eine in Achsrichtung der Gewindespindel ausgerichtete Nut ausgebildet sein, in die ein ortsfest angeordnetes Passstück eingreift. Die Länge der an der Gewindespindel ausgebildeten Nut ist vorteilhafterweise derart bemessen, dass das in die Nut eingreifende Passstück nicht die zum Verschwenken der Verschlussklappe erforderlichen Linearbewegungen der Gewindespindel verhindert.

Erfindungsgemäß weist der Spindeltrieb eine zweite Spindelmutter auf, an der eine Aufnahme für einen Betätigungshebel ausgebildet ist. Die Gewindespindel kann demnach vorzugsweise beabstandet von der ersten Spindelmutter in eine bevorzugt ortsfest drehbare zweite Spindelmutter eingreifen. Auf diese Weise wird ein Schraubgetriebe mit drei Getriebegliedern gebildet, wobei die erste, mit der Scharnieraufhängung verbundene Spindelmutter ein Antriebsglied, die Gewindestange ein Zwischenglied und die zweite Spindelmutter ein Antriebsglied des Schraubgetriebes bildet. Bevorzugt sind die Gewinde der beiden Spindelmuttern und das bzw. die an der Gewindespindel ausgebildeten Gewinde als Trapezgewinde ausgebildet.

Besonders vorteilhaft ermöglicht es diese dreigliedrige Ausgestaltung des Spindeltriebs, den Spindeltrieb als ein Untersetzungsgetriebe auszubilden. Hierzu ist bei einer weiteren vorteilhaften Weiterbildung der erfindungsgemäßen Verschlussvorrichtung vorgesehen, dass die beiden Spindelmuttern unterschiedliche Gewindesteigungen aufweisen. In diesem Zusammenhang weist zweckmäßigerweise das Gewinde der zweiten Spindelmutter eine deutlich geringere Steigung als das Gewinde der ersten Spindelmutter auf, um so eine möglichst große Untersetzung zu erzielen. Vorteilhaft weist bei dieser Ausgestaltung die Gewindespindel zwei Gewindeabschnitte auf, deren Gewindesteigungen korrespondierend zu den Gewindesteigungen der ersten und der zweiten Spindelmutter unterschiedlich sind. Das Untersetzungsverhältnis aufgrund der unterschiedlichen Gewindesteigungen kann z.B. so gewählt werden, dass zum Verschwenken der Verschlussklappe an der zweiten Spindelmutter ein Eingangsdrehmoment vom 30 Nm erforderlich ist, was bei Verwendung eines Betätigungshebels mit einem Hebelarm vom 300 mm eine akzeptable Kraftbeanspruchung der den Betätigungshebel benutzenden Person darstellt.

Die erfindungsgemäße Verschlussvorrichtung eignet sich insbesondere zum Einsatz an einem Druckbehälter, da Druckbehälter zur Erzielung der Druckfestigkeit in der Regel mit der vergleichsweise schweren Verschlussklappe verschlossen werden. Insofern betrifft die Erfindung auch einen Druckbehälter mit einer Verschlussvorrichtung, wie sie zuvor beschreiben worden ist. Bei diesem Druckbehälter kann es sich bevorzugt um einen im Wesentlichen zylindrischen Behälter handeln, der eine offene Stirnseite aufweist. Diese die Behälteröffnung bildende Stirnseite wird von einer Verschlussklappe verschlossen, die mittels mindestens eines Scharniers angelenkt ist, das an einem direkt an die Behälteröffnung anschließenden Umfangsabschnitt des Druckbehälters angeordnet ist.

Solche Druckbehälter bzw. druckfeste Behälter werden vorteilhaft in Verbindung mit Unterseebooten aber auch anderweitig verwendet, da sie bei einer Anordnung außerhalb eines Druckkörpers des Unterseebootes einen zusätzlichen druckfesten Stauraum darstellen, was insbesondere vor dem Hintergrund der vergleichsweise beengten Raumverhältnisse in dem Druckkörper vorteilhaft ist. Daher betrifft die Erfindung insbesondere auch ein Unterseeboot mit mindestens einem erfindungsgemäßen Druckbehälter. Bevorzugt weist das erfindungsgemäße Unterseeboot zwei dieser Druckbehälter aus, wobei an jeder Längsseite des Unterseebootes jeweils ein Druckbehälter angeordnet ist.

Nachfolgend ist die Erfindung anhand eines in der Zeichnung dargestellten Ausführungsbeispiels näher erläutert. Es zeigen:
- Figur 1: schematisch eine Seitenansicht eines Druckbehälters mit einer Verschlussvorrichtung,

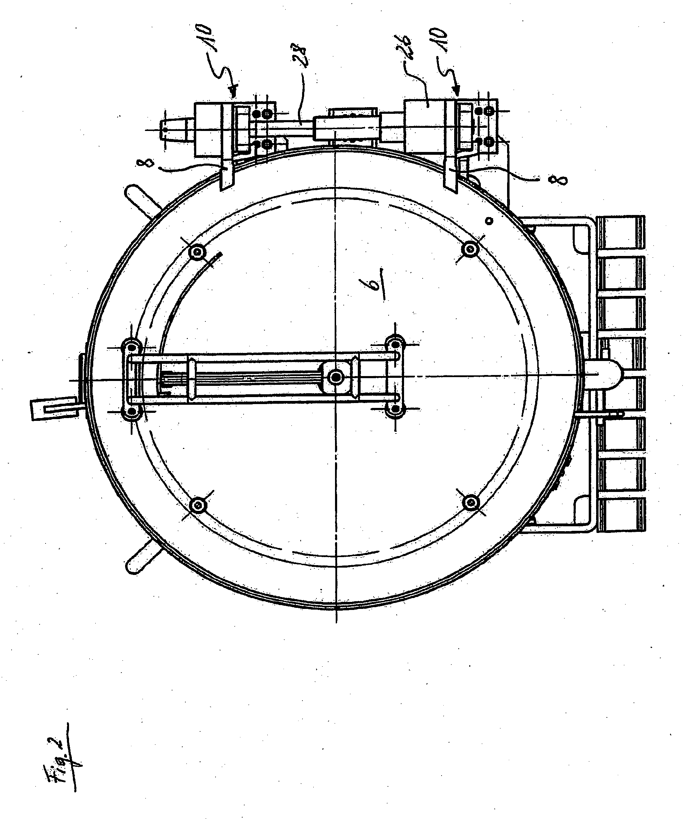

- Figur 2: vergrößert den Druckbehälter nach Figur 1 in einer Frontansicht und

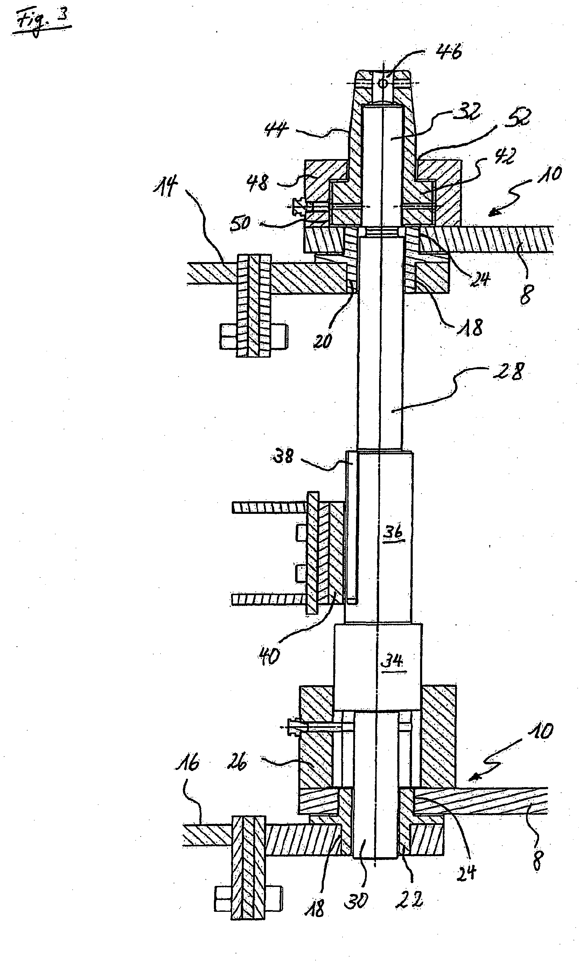

- Figur 3: in teilgeschnittener und vergrößerter Ansicht Betätigungsmittel zum Öffnen und Verschließen einer Verschlussklappe der in den Figuren 1 und 2 dargestellten Verschlussvorrichtung.

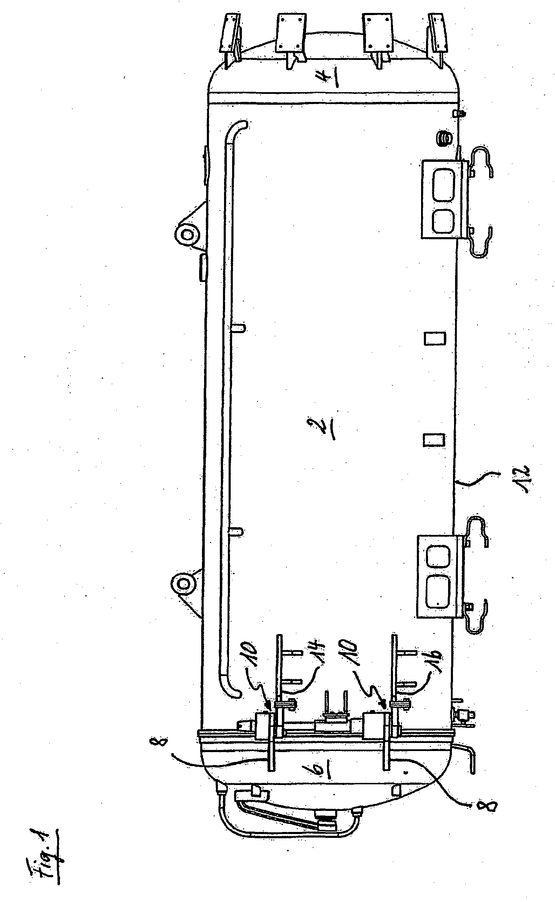

Der in Figur 1 dargestellte Druckbehälter weist einen hohlzylindrischen Grundkörper 2 auf. Eine erste offene Stirnseite des Druckkörpers 2 wird von einem kalottenförmig gewölbten Boden 4 fest verschlossen. Zum Verschließen der anderen offenen Stirnseite des Grundkörpers 2, die die Öffnung des Druckbehälters bildet, ist eine Verschlussklappe 6 vorgesehen, die ebenfalls kalottenförmig gewölbt ausgebildet ist.

Über zwei parallel und gleichgerichtet von der Verschlussklappe 6 auskragende Hebel 8 ist die Verschlussklappe 6 mittels zwei Scharnieren 10 am Grundkörper 2 angelenkt. Die Scharniere 10 sind an einer Umfangswandung 12 des Grundkörpers 2 in einem an die Öffnung des Grundkörpers angrenzenden Abschnitt angeordnet. Durch die Anlenkung mittels der Scharniere 10 ist die Verschlussklappe 6 grundsätzlich in eine die Öffnung des Druckbehälters verschließende oder in eine die Öffnung des Druckbehälters freigebende Stellung schwenkbar.

Jeweils ein Scharnier 10 ist an einem Arm 14 und einem Arm 16 angeordnet, wobei die Arme 14 und 16 parallel von der Umfangswandung 12 des Grundkörpers 2 nach außen kragen. An den freien Enden der Arme 14 und 16 ist jeweils eine Bohrung 18 ausgebildet. Eine gemeinsame Mittelachse der beiden Bohrungen 18 verläuft parallel zu der von der Verschlussklappe 6 verschlossenen Stirnseite des Grundkörpers 2.

In die Bohrung 18 des Arms 14 greift eine Hülse 20 ein, an deren umfänglicher Außenseite bezogen auf die Längsausdehnung der Hülse 20 in etwa mittig ein Kragen radial auskragt. Auf diesen Kragen stützt sich die Hülse 20 an dem Außenrand der Bohrung 18 des Arms 14 ab. Korrespondierend greift auch in die Bohrung des Arms 16 eine Hülse 22 ein. Auch diese Hülse 22 weist bezogen auf ihre Längsausdehnung etwa mittig einen radial nach außen kragenden Kragen auf, der zur Abstützung der Hülse 22 auf dem Außenrand der Bohrung 18 des Armes 16 dient.

Die freien Enden der Hebel 8 der Verschlussklappe 6 sind als Scharnieraufhängungen mit Bohrungen 24 ausgebildet. Korrespondierend hierzu dienen die Hülsen 20 und 22 als Scharnierzapfen zum Aufhängen der Verschlussklappe 6 and den beiden Scharnieren 10. Bei Bildung der Scharniere 10 sind die Hülsen 20 und 22 in jeweils einer der Bohrungen 24 der Hebel 8 in Eingriff.

An dem auf der Hülse 22 gelagerten Hebel 8 ist an einer von der Hülse 22 abgewandten Seite eine Mutter 26 derart befestigt, dass das Innengewinde dieser Mutter 26 konzentrisch zur Mittelachse der Bohrung 18 des Armes 16 angeordnet ist. Das Innengewinde der Mutter 26 ist als ein Trapezgewinde ausgebildet. Zusammen mit einer Gewindespindel 28 bildet die Mutter 26 als Spindelmutter 26 einen Teil eines Schraubgetriebes in Form eines Spindeltriebes.
Die Gewindespindel 28 ist so angeordnet, dass ein erster Endabschnitt 30 der Gewindespindel 28 in die an dem Arm 16 angeordnete Hülse 22 eingreift, während das andere Ende der Gewindespindel 28 die Hülse 20 derart durchgreift, dass ein zweiter Endabschnitt 32 der Gewindespindel 28 an der von dem Arm 14 abgewandten Seite aus der Hülse 20 herausragt.

An den Endabschnitt 30 der Gewindespindel 28 schließt sich ein Abschnitt 34 der Gewindespindel 28 an, der gegenüber dem Endabschnitt 30 einen größeren Durchmesser hat. Dieser Abschnitt 34 ist an seinem Außenumfang mit einem mit dem inneren Gewinde der Mutter 26 korrespondierenden Trapezgewinde versehen und in die Mutter 26 eingeschraubt.

In Richtung des Endabschnittes 32 schließt sich an den Abschnitt 34 ein Abschnitt 36 der Gewindespindel an. An diesem Abschnitt 36 ist an der Außenseite eine parallel zu einer Längsachse A der Gewindespindel 28 verlaufende Nut 38 ausgebildet. In die Nut 38 greift als ein Passelement ein Führungsblech 40 ein, dass ortsfest an der Außenseite des Grundkörpers 2 befestigt ist.

Das in die Nut 38 eingreifende Führungsblech 40 hindert die Gewindespindel 28 an einer Drehbewegung. Die Gewindespindel 28 ist somit nur linear in Richtung ihrer Längsachse bewegbar. Eine solche Linearbewegung bewirkt eine Drehbewegung der Spindelmutter 26 und durch die Kopplung der Spindelmutter 26 mit dem Hebel 8 eine Schwenkbewegung des Hebels 8. Durch diese Schwenkbewegung des Hebels 8 kann die Verschlussklappe 6 des Druckbehälters je nach Richtung der Linearbewegung der Gewindespindel 28 entweder auf- oder zugeschwenkt werden.

Die Einleitung der Betätigungskraft bzw. des Betätigungsmoments zum Schwenken der Verschlussklappe 6 des Druckbehälters erfolgt über eine Mutter 42, die eine zweite Spindelmutter 42 des Spindeltriebs bildet. Die Spindelmutter 42 ist auf dem aus der Hülse 20 herausragenden Endabschnitt 32 aufgeschraubt. Der Endabschnitt 32 weist hierzu typischerweise ein mit dem Gewinde der Spindelmutter 42 korrespondierendes Außengewinde auf. Auf das Gewinde der Spindelmutter 42 und das Außengewinde des Endabschnitts 32 der Gewindespindel 28 sind als Trapezgewinde ausgebildet.

Die Spindelmutter 42 bildet darüber hinaus eine Aufnahme für einen in der Zeichnung nicht dargestellten Betätigungshebel zum manuellen Verschwenken der Verschlussklappe 6 des Druckbehälters. Hierzu ist an dem, dem freien Ende des Endabschnitts 32 zugewandten Ende der Spindelmutter 42, ein Absatz 44 angesetzt, dessen Durchmesser geringer als derjenige der Gewindespindel 42 ist. An dem von der Spindelmutter 42 abgewandten Ende des Absatzes 44 ist eine Ausnehmung 46 ausgebildet, in die ein korrespondierendes Einsteckelement des verwendeten Betätigungshebels formschlüssig einsteckbar ist.

Zur Verhinderung einer Linearbewegung der Spindelmutter 42 auf dem Endabschnitt 32 der Gewindespindel 28 ist ein Gehäuse 48 vorgesehen, in dem die Spindelmutter 42 formschlüssig festgelegt ist. Die formschlüssige Festlegung der Spindelmutter 42 ist derart, dass sie um die Längsachse A der Gewindespindel 28 drehbar aber nicht in Achsrichtung beugbar ist. Das Gehäuse 48 ist auf dem auf der Hülse 20 gelagerten Hebel 8 befestigt und demnach bei einer Schwenkbewegung des Hebels 8 um die Längsachse A der Gewindespindel 28 drehbar. Die Innenwandung des Gehäuses 48 bildet ein Gleitlager 50 für die Spindelmutter 42. An dem Gehäuse 48 ist an einer von dem Hebel 8 abgewandten Seite eine Durchbrechung 52 ausgebildet. Durch diese Durchbrechung 52 ragt der an der Spindelmutter 42 ausgebildete Absatz 44 aus dem Gehäuse 48.

Die Gewindesteigung der Spindelmutter 42 und des Endabschnitts 32 der Gewindespindel 28 unterscheidet sich von der Gewindesteigung der Spindelmutter 26 und des Abschnitts 34 der Gewindespindel 28. So ist die Gewindesteigung der Spindelmutter 42 und des Endabschnitts 32 der Gewindespindel 28 zur Bildung eines untersetzenden Schraubgetriebes deutlich kleiner gewählt als die Gewindesteigung der Spindelmutter 26 und des Abschnitts 34 der Gewindespindel 28. So kann bei der Spindelmutter 42 und dem Endabschnitt 32 der Gewindespindel 28 eine Gewindesteigung von 6mm pro Umdrehung gewählt werden, während die Gewindesteigung der Spindelmutter 26 und des Abschnitts 34 der Gewindespindel 28 155mm pro Umdrehung betragen kann. Aufgrund dieser unterschiedlichen Gewindesteigungen kann die Verschlussklappe 6 des Druckbehälters mit vergleichsweise geringem Kraftaufwand manuell in eine Öffnungs- und eine Schließstellung geschwenkt werden. Des Weiteren wird durch die Wahl dieser unterschiechen Gewindesteigungen in Verbindung mit der selbsthemmende Ausgestaltung der Gewinde als Trapezgewinde erreicht, dass der Spindeltrieb als eine Verriegelung für die Verschlussklappe 6 dient. Zusätzliche Verriegelungsmittel zum Verriegeln der Verschlussklappe 6 sind daher nicht erforderlich.

### Bezugszeichenliste

- 2 -: Grundkörper
- 4 -: Boden
- 6 -: Verschlussklappe
- 8 -: Hebel
- 10 -: Scharnier
- 12 -: Umfangswandung
- 14 -: Arm
- 16 -: Arm
- 18 -: Bohrung
- 20 -: Hülse
- 22 -: Hülse
- 24 -: Bohrung
- 26 -: Mutter, Spindelmutter
- 28 -: Gewindespindel
- 30 -: Endabschnitt
- 32 -: Endabschnitt
- 34 -: Abschnitt
- 36 -: Abschnitt
- 38 -: Nut
- 40 -: Führungsblech
- 42 -: Mutter, Spindelmutter
- 44 -: Absatz
- 46 -: Ausnehmung
- 48 -: Gehäuse
- 50 -: Gleitlager
- 52 -: Durchbrechung

- A -: Längsachse

## Patentansprüche

1. Verschlussvorrichtung mit einer Verschlussklappe (6), die mittels mindestens eines außenseitig einer Öffnung angeordnetem Scharniers (10) angelenkt ist, wobei an dem Scharnier (10) Betätigungsmittel zum Öffnen und Verschließen der Verschlusskappe (6) angeordnet sind, welche ein als ein Spindeltrieb ausgebildetes Schraubgetriebe beinhalten, **dadurch gekennzeichnet, dass** an einer mit der Verschlussklappe (6) verbundenen Scharnieraufhängung eine Spindelmutter (26) des Spindeltriebs befestigt ist und dass der Spindeltrieb eine zweite Spindelmutter (42) aufweist, an welcher eine Aufnahme für einen Betätigungshebel ausgebildet ist.

2. Verschlussvorrichtung nach Anspruch 1, **dadurch gekennzeichnet, dass** eine Längsachse (A) einer Gewindespindel (28) des Spindeltriebs mit einer Schwenkachse des Scharniers (10) übereinstimmt.

3. Verschlussvorrichtung nach einem der vorangehenden Ansprüche, **dadurch gekennzeichnet, dass** Formschlussmittel (40) zur Verhinderung einer Verdrehung der Gewindespindel (28) vorgesehen sind.

4. Verschlussvorrichtung nach einem der vorangehenden Ansprüche, **dadurch gekennzeichnet, dass** Formschlussmittel (48) zur Verhinderung einer Linearbewegung der zweiten Spindelmutter (42) vorgesehen sind.

5. Verschlussvorrichtung nach einem der vorangehenden Ansprüche, **dadurch gekennzeichnet, dass** die beiden Spindelmuttern (26, 42) unterschiedliche Gewindesteigungen aufweisen.

6. Druckbehälter mit einer Verschlussvorrichtung nach einem der vorangehenden Ansprüche.

7. Unterseeboot mit mindestens einem an der Außenseite des Unterseeboots angeordneten Druckbehälter nach Anspruch 6.

## Claims

1. A closure device with a closure flap (6) which is articulated by way of at least one hinge (10) arranged on the outer side of an opening, wherein actuation means for opening and closing the closure flap (6) are arranged on the hinge (10), said actuation means comprising a screw transmission designed as a spindle drive, **characterised in that** a spindle nut (26) of the spindle drive is fastened on a hinge mounting which is connected to the closure flap (6) and that the spindle drive comprises a second spindle nut (42), on which a receiver for an actuation lever is formed.

2. A closure device according to claim 1, **characterised in that** a longitudinal axis (A) of a threaded spindle (28) of the spindle drive corresponds to a pivot axis of the hinge (10).

3. A closure device according to one of the preceding claims, **characterised in that** positive-fit means (40) are provided for preventing a rotation of the threaded spindle (28).

4. A closure device according to according to one of the preceding claims, **characterised in that** positive-fit means (48) for preventing a linear movement of the second spindle nut (42) are provided.

5. A closure device according to one of the preceding claims, **characterised in that** the two spindle nuts (26, 42) have different thread pitches.

6. A pressure vessel with a closure device according to one of the preceding claims.

7. A submarine with at least one pressure vessel according to claim 6, which is arranged on an outer side of the submarine.

## Revendications

1. Dispositif de fermeture avec un volet de fermeture (6) qui est monté pivotant au moyen d'une charnière (10) disposée à l'extérieur d'une ouverture, des moyens de manipulation pour ouvrir et fermer le volet de fermeture (6) étant disposés à la charnière (10), lesquels moyens comprenant une transmission à vis sous la forme d'un entraînement à tige filetée, **caractérisé en ce que**, sur un support de charnière solidaire du volet de fermeture (6), est fixé un écrou de tige filetée (26) de l'entraînement à tige filetée et **en ce que** l'entraînement à tige filetée comprend un second écrou de tige filetée (42) sur lequel est formé un élément de réception pour un levier de manipulation.

2. Dispositif de fermeture selon la revendication 1, **caractérisé en ce qu'**un axe longitudinal (A) d'une tige filetée (28) de l'entraînement à tige filetée correspond à un axe de pivotement de la charnière (10).

3. Dispositif de fermeture selon l'une des revendications précédentes, **caractérisé en ce que** des moyens à correspondance de forme (40) pour empêcher une rotation de la tige filetée (28) sont prévus.

4. Dispositif de fermeture selon l'une des revendications précédentes, **caractérisé en ce que** des moyens à correspondance de forme (48) pour empêcher un mouvement linéaire du second écrou de tige filetée (42) sont prévus.

5. Dispositif de fermeture selon l'une des revendications précédentes, **caractérisé en ce que** les deux écrous de tige filetée (26, 42) ont des pas de vis différents.

6. Conteneur à pression avec un dispositif de fermeture selon l'une des revendications précédentes.

7. Sous-marin avec au moins un conteneur à pression selon la revendication 6 disposé sur la face extérieure du sous-marin.
